(19) Europäisches Patentamt
European Patent Office
Office européen des brevets

(11) EP 0 450 893 B1

(12) **EUROPEAN PATENT SPECIFICATION**

(45) Date of publication and mention of the grant of the patent:
**01.07.1998 Bulletin 1998/27**

(51) Int Cl.[6]: **G06T 1/20**

(21) Application number: **91302842.9**

(22) Date of filing: **02.04.1991**

(54) **Data processing system**

Datenverarbeitungssystem

Système de traitement de données

(84) Designated Contracting States:
**DE FR GB IT**

(30) Priority: **02.04.1990 GB 9007343**

(43) Date of publication of application:
**09.10.1991 Bulletin 1991/41**

(73) Proprietor: **QUESTECH LIMITED**
**Wokingham Berkshire RG11 2PP (GB)**

(72) Inventor: **Billing., Robert**
**Crowthorne, Berkshire RG11 2JR (GB)**

(74) Representative: **Bubb, Antony John Allen et al**
**GEE & CO.**
**Chancery House**
**Chancery Lane**
**London WC2A 1QU (GB)**

(56) References cited:
**DE-A- 3 804 938**

- **HIGHLY PARALLEL COMPUTERS, PROCEEDINGS OF THE IFIG WG 10.3 WORKING CONFERENCE March 1986, SOPHIA ANTIPOLIS, FR pages 259 - 270 G.L. REIJNS ET AL. 'Parallel Processing of Video Images'**
- **PROCEEDINGS ICASSP 86 vol. 2, April 1986, TOKYO, JP pages 797 - 800 T.NISHITANI ET AL. 'Video Signal Processor Configuration by Multiprocessor Approach'**
- **PROCEEDINGS OF THE INTERNATIONAL CONFERENCE ON CYBERNETICS AND SOCIETY November 1985, TUCSON, USA pages 834 - 837 SH. TATSUMI ET AL. 'TULIP-II: a Flexible Multiprocessor System for Image Processing by Controlling the Video Data Flows'**
- **IBM TECHNICAL DISCLOSURE BULLETIN vol. 22, no. 3, August 1979, NEW YORK US pages 1301 - 1302 D.F. BANTZ, C.J. EVANGELISTI 'Graphic Transformations of Digital Video Images Using Microprocessors'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 450 893 B1

Printed by Jouve, 75001 PARIS (FR)

## Description

This invention concerns improvements in data processing systems, and relates to a system particularly suitable for the rapid processing of one or more incoming streams of input information wherein the speed at which the incoming streams of information are capable of being processed is increased in comparison with known systems.

In certain applications involving the rapid processing of data, the rate at which data is required to be processed is such that processing is possible only by the use of dedicated hardware. One such application is the processing of digital television signals in order to achieve so-called digital video effects by known techniques such as linear keying, chroma keying and painting. The necessity for the use of dedicated hardware correspondingly limits the versatility of any given digital video effects apparatus, and therefore it would be highly desirable to provide a digital video effects apparatus controlled by a general purpose processing system such that a variety of digital video effects could be achieved by providing the processing system with corresponding stored programs. Despite the advent of faster microprocessors, the processing of television signals in real time in software is not yet a practical possibility.

It is accordingly an object of the present invention to provide a general purpose data processing system that overcomes or reduces the above-mentioned difficulty. It will be appreciated that although the intended application of such a system is in the field of digital video effects, such a system may have more general application in replacing dedicated hardware in a context where very rapid processing of incoming data is required.

In a known arrangement, see IBM Technical Disclosure Bulletin, vol. 22, no.3, August 1979, New York US, pages 1301 and 1302, a data processing system for processing input information received from a source in the form of a block of information comprising a number of discrete sections comprises a plurality of processors, means for transferring the block of information to the processors in such a manner that the discrete sections of information are distributed between respective processors and means for receiving the discrete sections of information, after processing, to form a composite block of processed information.

In such an arrangement the source is in the form of a memory store each of a number of sections of which holds a corresponding discrete section of information and is directly connected to a corresponding processor. Thus each processor is dedicated to process only information contained in a corresponding section of the memory store. The means for receiving the discrete sections of information comprises a similar memory store having discrete sections each of which is connected to a corresponding one of the processors. Thus in such an arrangement information from one section of an input store is processed by a dedicated processor and is transferred from the processor to a section of the output store that bears a defined positional relationship corresponding to that of the section of the input store from which the information was received.

Such an arrangement enables the processing of a complete block of information from the input store by means of a number of processors, but has the disadvantage that the number of processors must always be the same as the number of discrete sections of information to be processed, and that some processors may be more heavily loaded than others where information from some sections of the input store requires longer to process.

An arrangement in accordance with the present invention is characterised in that the source comprises an input buffer, said means for distributing said discrete sections of information between said processors comprises a common data bus arranged to receive said discrete sections serially in timed relation from said input buffer and input control means for selecting each processor to receive a said discrete section in accordance with a state of readiness thereof, and is further characterised in that said receiving means comprises an output buffer and that the arrangement is such that each discrete section of information is stored and processed together with information indicating its relative position in the original block, whereby a correspondingly ordered block of information can be reformed from the processed information received by said output buffer.

An arrangement in accordance with the invention has the advantage that any discrete section of information can be processed by any available processor and therefore the number of processors is not determined by the number of sections of information to be processed. Moreover, the loading on the respective processors is more evenly distributed, so that for a given task, the number of processors can be reduced, or the processing of information can be completed more rapidly with a given number of processors.

Preferably the system comprises two or more input buffers the respective buffers being so associated that said blocks and sections of different signals in different buffers can be correlated to one another whereby correlated sections of different signals are processed by the same processor.

In an application of the above data processing system to the processing of digital television signals, the sources of input information may comprise digital television picture or image signals and/or keying signals, and the block of information contained within each such signal may comprise an individual image frame of such a signal. The discrete sections of the block of information may then comprise individual rectangular image sections into which each image frame can be divided. In this case each said section of the original signal will not comprise a portion of the original signal received continuously by the input buffer but will comprise a number of signal portions from consecutive lines of the original image frame. Accordingly the system will incorporate appropriate means for defining and identifying each section of the original signal corresponding to the appropriate rectangular image area.

All of the plurality of processors will then be provided with a common stored program defining a particular video effect to be achieved by the processing of the incoming signals, such as linear keying, chroma keying or painting. Since each processor will perform the same operation on incoming signal sections corresponding to a particular rectangular image area of a complete video image frame, the rate at which each complete image frame can be processed will be a function of the speed of operation of the individual processors and the number of processors provided. By the provision of a sufficiently large number of processors to receive information from the input buffers, the speed of operation of the complete system can be made such as to process a digital television signal in real time.

The invention is illustrated by way of example in the accompanying drawings in which:

Figure 1 is a block diagram showing the general arrangement of a data processing system in accordance with the invention, and

Figure 2 is a block diagram illustrating in more detail the arrangement of each processor of Fig. 1.

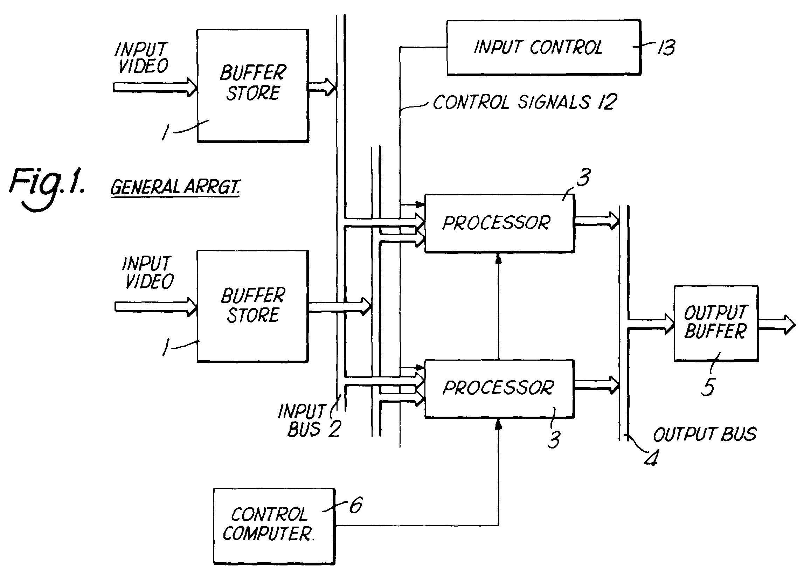

Referring to Fig. 1 of the drawings a data processing system for use in processing digital television signals to provide a desired digital video effect comprises one or more buffer stores 1 each capable of holding one or more frames of a digital video signal and having an output coupled to an input bus 2. A plurality of processors 3 all have inputs coupled in common to an input bus 2 associated with a corresponding buffer store 1 and all have at least one output coupled to a corresponding output bus 4 feeding a common output buffer 5. All of the processors 3 are controlled by a common control computer 6 defining the processing operation to be performed on the input data, and are further controlled by a common input control system 13 that serves to control the manner in which the processors receive information from the input bus or buses 2, in a manner to be explained in more detail below.

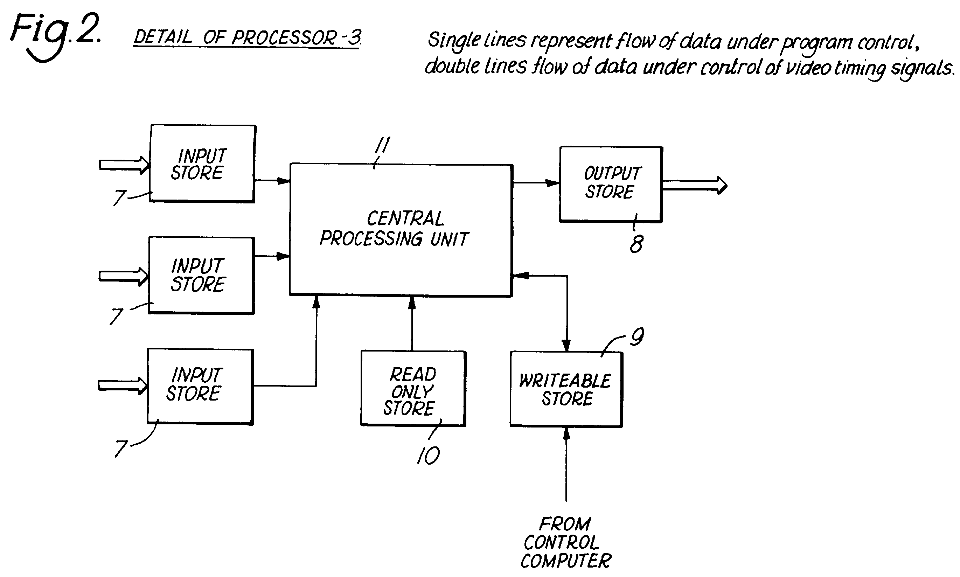

Referring to Fig. 2, the organisation of each individual processor 3 is illustrated in more detail. Each processor comprises a central processing unit 11 provided with one or more input stores 7 corresponding in number to the buffer stores 1 and input buses 2, each input store 7 being coupled to a corresponding input bus 2. Each input store 7 comprises a random access memory which is capable of storing less than one frame of an input digital video signal, i.e. information corresponding to a rectangular section forming part of an original image frame. Each central processing unit 11 is also coupled to a random access memory 8 forming an output store and corresponding in capacity substantially to the capacity of each input store 7. The output store 8 is coupled to the output bus 4 feeding the output buffer 5 of Fig. 1. Each processor 11 further has a read only store 10 for holding a program in accordance with which the processor is to operate, and a writeable store 9 to hold commands from the control computer 6 of Fig. 1. The central processor unit 11 can be any processor of complexity at least equivalent to the Universal Turing Machine as defined by Minsky.

In operation of the system in accordance with the invention, one or more digital video signals are fed to the respective input buffers 1 and stored therein in such a manner that each frame of an input signal is stored as a number of discrete rectangular sections that together make up the complete image area of a single frame. The discrete sections stored in the respective buffers 1 are distributed for processing between the respective processors 3, by transferring each section from an input buffer 1 to an input store 7 of a corresponding processor. When a number of video signals are to be processed, then image sections from each of the respective buffer stores 1 and corresponding to the same rectangular image area to be represented in a processed output signal are respectively transferred to the input stores 7 of the same central processing unit 11. In order to control the distribution of such sections from the buffer stores 1 to the input stores 7 of the processors 3 the input control 13 is arranged to control transfer between the buffer store or stores 1 and the input store or stores 7 by means of two control signals indicated by the line 12 in Fig. 1. Thus, when any individual processor is ready to accept input data it asserts a first signal, which is connected to all processors in parallel. If input is available from the buffer store or stores 1 the controller 13 asserts a second signal which is passed through all the processors in series. The first processor 3 which is ready to accept input interrupts this signal, and does not pass it to following processors. The data is then placed on the bus or busses 2 from the store or stores 1 and the one processor which is accepting, but not passing on, the second signal then also accepts the data from the store or stores 1 into its input store or stores 7. Timing signals must also be provided and distributed to all units, as will be understood by one skilled in the art, in order to prevent the control signals changing while an individual data transfer is in progress.

Each processor 3 that has received data corresponding to a rectangular image section will now process the received data in accordance with a program within the store 10 and controls received in store 9 from the control computer 6. The commands provided by the computer 6 may correspond to those capable of being provided by known digital effects apparatus. For example the control computer 6 can be equipped with a variety of control devices such as a keyboard, a locater device such as a mouse, tracker ball or joystick, or a digitiser tablet with either a stylus or a cursor device.

After processing of the data in a manner dealt with in more detail below, the resulting information corresponding to the rectangular image section of the video image frame is presented in the output store 8 for transfer to the output buffer 5 via the output bus 4. Transfer of the data between the output store 8 and the output buffer 5 in such a manner that all of the information from the respective processors 3 can be transferred, in timed relation, to the output buffer 5 is effected by applying control signals in a similar manner as already described in relation to the input control 13.

Since, in order for the processors to handle effects which change in the horizontal or vertical directions of the complete image frame, the coordinates of the individual sections are transferred from the buffer stores 1 along with the video data for that section, the re-assembly of the individual sections stored within the output buffer 5 to re-form a composite signal representing a complete image frame can be achieved by sorting the stored image sections by their respective coordinates.

The number of individual sections into which each image frame of the input video signal or signals is divided need not necessarily correspond with the number of processors 3. If the number of sections exceeds the number of processors, then some sections will wait in the buffer stores 1 until a processor is ready to accept them. On the other hand if the number of processors exceeds the number of sections then sections from several frames may be processed at once. The time taken to process a given number of frames thus depends in inverse proportion on the number of processors. Given sufficient processors therefore it would be possible to process moving images in real time, given a smaller number of processors it is still possible to process moving images, but the processing time exceeds the running time of the sequence of images.

As already mentioned above the function of the data processing system is achieved by the program executed by the respective processors 3, which may be held in stores 9 or 10. The general form of this program together with individual examples of specific functions will now be described in more detail.

The program is described in the following program descriptor language form.

| | |
|---|---|
| Action | Where the name of an action is written that action is performed |
| If C Then A | If condition C is true then action A is performed |
| Else B | After If, action B is performed if the condition was not true |
| For R Do A | Perform action A repeatedly for all the conditions in range R |
| ( A B C ) | Actions A, B and C are all to be performed in sequence and treated as one composite action. |
| Forever A | Action A is to be repeated 'forever', that is to say until interrupted by operator action such as switching off power. |
| Define P (Q R) | The symbol P is defined to mean 'perform actions Q and R'. |
| P() | Do the actions defined as symbol P. |

The main part of the program.

```
Forever
(
Accept_Input

Process ()
Send_Output
)
```

Where the action Accept_Input causes a section of input video to enter the stores 7, Process is defined as the actions needed to process a section and Send_Output causes a section of video to leave the store 8.

The data on which the program operates is defined in terms of a number of data structures.

The three input stores 7 may be referenced by the names Input1, Input2, and Input3. Each store contains the boundaries of the section of video in fields which may be called Input1.Top, Input1.Bottom, Input1.Left, Input1.Right, Input2.Top, etc. The video data is held in the stores as an array of pixels, each of which may have one, two or three separations, for example, Red, Green, and Blue, of if coding conforming to European Broadcasting Union recommendation 601 is used Y, U and V.
A pixel may therefore be referred to as Input1.Pixel[X,Y], Red,Input1.Pixel[X.Y.].Green etc. The whole pixel, including all three separations may be referred to as Input1. Pixel[X,Y] and processed as such.

A simple definition of Process, which has no effect on the picture could therefore be as follows.

```
Define Process
(
 Output.Top = Input.Top
 Output.Bottom = Input.Bottom
 Output.Left = Input.Left
 Output.Right = Input.Right
 For X = Left to Right Do
 (
  For Y = Top to Bottom Do
  (
   Output.Pixel[X,Y] = Input1.Pixel[X,Y]
  )
 )
)
```

However different process definitions produce different effects. If the input stores Input1 and Input2 contain two pictures, and Input3 contains a key signal which is zero in the areas where Input1 is visible or a value Maximum_Key where Input2 is visible then the following definition of Process would key one picture over the other.

```
Define Process
(
 Output.Top = Input.Top
 Output.Bottom = Input.Bottom
 Output.Left = Input.Left
 Output.Right = Input.Right
 For X = Left to Right Do
 (
  For Y = Top to Bottom Do
  (
   I2 = Input3.Pixel[X,Y].Key
   I1 = Maximum_Key - I2
   Output.Pixel[X,Y].Red =
     ( Input1.Pixel[X,Y].Red*I1 + Input2.Pixel[X,Y].
                                  Red*I2 ) / Maximum-Key
   Output.Pixel[X,Y].Green =
     ( Input1.Pixel[X,Y].Green*I1 + Input2.Pixel[X,Y].
                                  Green*I2 ) / Maximum_Key

   Output.Pixel[X,Y].Blue =
     ( Input1.Pixel[X,Y].Blue*I1 + Input2.Pixel[X,Y].
                                  Blue*I2 ) / Maximum_Key
  )
 )
)
```

Chroma keying can be achieved by a different definition of process. This requires a new operator Background (Pixel) which is logically true if the pixel is the background colour.

```
Define Process
(
 Output.Top = Input.Top
 Output.Bottom = Input.Bottom
 Output.Left = Input.Left
 Output.Right = Input.Right
 For X = Left to Right Do
 (
  For Y = Top to Bottom Do
  (
   If Background ( Input1.Pixel )
   Then
    Output.Pixel[X,Y] = Input2.Pixel[X,Y]
   Else
    Output.Pixel[X,Y] = Input1.Pixel[X,Y]
  )
 )
)
```

Painting is slightly more complex. The output picture must be continuously recycled to the input, and two new variables X_Pen and Y_Pen are introduced which indicate the position of the writing device, which may be user controlled or driven in a series of programmed moves by the control computer. The values of these variables are placed in the control store 9 by the computer 6.

Two local variables X_Last and Y_Last are used to record where the pen was last. The control system must update X_Pen and Y_Pen in such a way that for a single pass of the frame through the system only a single pair of values is used.

A new function Pen_Shape(X,Y) is used. Given an offset from a nominal pen position as a vector (X,Y) it returns a value between zero and Miximum_Key. This value is a function of X and Y in such a way that it defines the shape of the mark made by the pen. This mark may be hard edged if the function falls quickly with distance, soft edged if the function falls slowly, and may take many different shapes.

The colour of the pen is defined by the variables Pen_Red, Pen_Green and Pen_Blue which are also placed in the store 9 by the control computer 6.

```
Define Process
(
 Output.Top = Input.Top
 Output.Bottom = Input.Bottom
 Output.Left = Input.Left
 Output.Right = Input.Right
 if ( X_Last = X_Pen and Y_Last = Y_Pen )
 then
 (
  For X = Left to Right Do
  (
   Output.Pixel[X,Y] = Input1.Pixel[X,Y]
  )
 )
)
```

```
else
(
 For X = Left to Right Do
 (
  For Y = Top to Bottom Do
  (
    NewKey = Pen_Shape ( X - X_Pen, Y - Y_Pen )
    OldKey = Maximum_Key - NewKey
    Output.Pixel[X,Y] . Red =
      ( Input1.Pixel[X,Y] . Red * OldKey +
                          Pen_Red * NewKey ) / Maximum_Key
    Output.Pixel[X,Y] . Green =
      ( Input1.Pixel[X,Y] . Green * OldKey +
                          Pen_Green * New Key ) / Maximum_Key
    Output.Pixel[X,Y] . Blue =
      ( Input1.Pixel[X,Y] . Blue * OldKey +
                              Pen_Blue * NewKey ) / Maximum_Key
   )
  )
 )
)
```

To produce a mixer which can fade or wipe the picture to another picture we need another function, Mix_Pattern (X, Y). This function has a value which can vary over the picture area as function of X and Y co-ordinates in a way which is controlled by the control computer. Typically it could have one value in the range 0 to Maximum_Key over the whole area to produce a fade or disolve. It could take the value zero over a range, then ramp to Maximum_Key and remain there in order to produce a join between two pictures. The exact range controls the pattern. For example if the expression

$$( X - XO ) * Sharpness$$

is used, the value being limited to be in the range zero to Maximum-Key, then a vertical join between pictures is obtained, the position being controlled by the variable XO and the sharpness of the join by Sharpness.

The expression

$$( ( X - XO ) * \sin ( A ) + ( Y - YO ) * \cos ( A ) ) * Sharpness$$

will give a line angled A to the horizontal. Similar expressions can be derived for circular and elliptical patterns. Non-linear expressions can be used to create shapes with corners and irregular shapes.

```
Define Process
(
 Output.Top = Input.Top
 Output.Bottom = Input.Bottom
 Output.Left = Input.Left
 Output.Right = Input.Right
 For X = Left to Right Do
 (
  For Y = Top to Bottom Do
  (
   I2 = MixPattern ( X, Y )
   I1 = Maximum_Key _ I2
   Output.Pixel[X,Y].Red =
     ( Input1.Pixel[X,Y].Red*I1 + Input2.Pixel[X,Y].
                                  Red*I2 ) / Maximum_Key
   Output.Pixel[X,Y].Green =
     ( Input1.Pixel[X,Y].Green*I1 + Input2.Pixel[X,Y].
                                  Green*I2 ) / Maximum_Key
   Output.Pixel[X,Y].Blue =
     ( Input1.Pixel[X,Y].Blue*I1 + Input2.Pixel[X,Y].
                                  Blue*I2 ) / Maximum_Key

  )
 )
)
```

The advantage of this technique over the use of dedicated hardware is that many different definitions of process may be produced, and the different programs used as directed by the control computer, allowing one item of hardware to function as linear keyer, chroma keyer, paint device or mixer.

**Claims**

1. A data processing system for processing input information received from a source (1) in the form of a block of information comprising a number of discrete sections, said system comprising a plurality of processors (3), means (2,13) for transferring the block of information to the processors (3) in such a manner that said discrete sections of information are distributed between respective processors (3) and means (5) for receiving the discrete sections of information, after processing, to form a composite block of processed information, characterised in that said source (1) comprises an input buffer, said means (2,13) for distributing said discrete sections of information between said processors comprise a common data bus (2) arranged to receive said discrete sections serially in timed relation from said input buffer (1) and input control means (13) for selecting each processor (3) to receive a said discrete section in accordance with a state of readiness thereof, that said receiving means (5) comprises an output buffer and that the arrangement is such that each discrete section of information is stored and processed together with information indicating its relative position in the original block, whereby a correspondingly ordered block of information can be reformed from the processed information received by said output buffer.

**2.** A data processing system according to Claim 1, characterised in that it comprises two or more input buffers (1) the respective buffers (1) being so associated that said blocks and sections of different signals in different buffers can be correlated to one another whereby correlated sections of different signals are processed by the same processor (3).

**3.** A data processing system according to Claim 1 or 2 for use in the processing of digital television signals, characterised in that the sources of input information comprise digital television picture or image signals and/or keying signals, and that the block of information contained within each such signal comprises an individual image frame of such a signal.

**4.** A system as claimed in Claim 3, characterised in that the discrete sections of the said image frame comprise individual rectangular image sections into which each image frame can be divided.

**5.** A system acording to Claim 4, characterised in that all of the plurality of processors are provided with a common stored program defining a particular video effect to be achieved by the processing of the incoming signals.

**6.** A system as claimed in Claim 5, characterised in that the video effect according to said program is an effect to be achieved over an area of a said image frame including a plurality of said rectangular image sections, that each said discrete section of information comprising a said rectangular image section includes coordinates defining the relative position of said section within said area, and that said means for providing said composite signal from said resulting sections of information includes means for sorting said resulting sections in accordance with their corresponding coordinates.

**7.** A system as claimed in anyone of Claims 1-6 characterised in that said control means (13) includes, for controlling the transfer of data to each processor (3), a first signal bus (12) coupled to all processors (3) in parallel, and a second signal bus (12) coupled to all processors (3) in series, the arrangement being such that each processor (3) is programmed to apply to said first signal bus (12) a request to receive data to be processed; that in response to a request signal on said first signal bus the control means (13) is arranged to provide on said second signal bus an answer signal indicating availability of the or an input buffer to transmit data; and that the first processor (3) that is applying a request signal and that receives an answer signal is arranged to interrupt the series signal path for the answer signal and to accept a section of data presented at its data input.

**8.** A system as claimed in anyone of Claims 1-7 characterised in that said control means (13) includes, for controlling the transfer of data from each processor (3), a first signal bus (12) coupled to all processors (3) in parallel, and a second signal bus (12) coupled to all processors (3) in series, the arrangement being such that each processor (3) is programmed to apply to said first signal bus (12) a request to transmit data; that in response to a request signal on said first signal bus the control means (13) is arranged to provide on said second signal bus an answer signal indicating availability of the or an output buffer to receive data; and that the first processor (3) that is applying a request signal and that receives an answer signal is arranged to interrupt the series signal path for the answer signal and to provide a section of data at its data output.

## Patentansprüche

**1.** Datenverarbeitungssystem zum Verarbeiten von Eingangsinformation, die von einer Quelle (1) in Form eines Informationsblockes empfangen wird, der eine Anzahl von diskreten Abschnitten aufweist, wobei das System versehen ist mit einer Mehrzahl von Prozessoren (3), einer Anordnung (2, 13) zum Übertragen des Informationsblokkes zu den Prozessoren (3) derart, daß die diskreten Informationsabschnitte zwischen betreffenden Prozessoren (3) aufgeteilt werden, und einer Anordnung (5) zum Empfangen der diskreten Informationsabschnitte nach einer Verarbeitung, um einen zusammengesetzten Block von verarbeiteter Information zu bilden, dadurch gekennzeichnet, daß die Quelle (1) einen Eingangspuffer aufweist und die Anordnung (2, 13) zum Aufteilen der diskreten Informationsabschnitte zwischen den Prozessoren einen gemeinsamen Datenbus (2), der so ausgelegt ist, daß er die diskreten Abschnitte von dem Eingangspuffer (1) seriell in zeitlicher Relation empfängt, und eine Eingangssteueranordnung (13) zum Auswählen jedes Prozessors (3) für den Empfang eines der diskreten Abschnitte entsprechend einem Bereitschaftsstatus desselben aufweist, daß die Empfangsanordnung (5) einen Ausgangspuffer aufweist, und daß die Anordnung so getroffen ist, daß jeder diskrete Informationsabschnitt zusammen mit Information, die seine relative Position in dem ursprünglichen Block anzeigt, gespeichert und verarbeitet wird, wodurch wieder ein entsprechend geordneter Informationsblock aus der von dem Ausgangspuffer empfangenen verarbeiteten Information gebildet werden kann.

**2.** Datenverarbeitungssystem nach Anspruch 1, dadurch gekennzeichnet, daß es zwei oder mehr Eingangspuffer (1) aufweist, wobei die betreffenden Puffer (1) so zugeordnet sind, daß die Blöcke und Abschnitte von unterschiedlichen Signalen in unterschiedlichen Puffern miteinander korreliert werden können, wodurch korrelierte Abschnitte von unterschiedlichen Signalen von demselben Prozessor (3) verarbeitet werden.

**3.** Datenverarbeitungssystem nach Anspruch 1 oder 2 zur Verwendung beim Verarbeiten von digitalen Fernsehsignalen, dadurch gekennzeichnet, daß die Eingangsinformationsquellen digitale Fernsehbildsignale und/oder Tastsignale aufweisen und daß der in jedem solchen Signal enthaltene Informationsblock ein individuelles Bild eines solchen Signals aufweist.

**4.** System nach Anspruch 3, dadurch gekennzeichnet, daß diskrete Abschnitte des Bildes individuelle rechteckige Bildabschnitte aufweisen, in welche jedes Bild unterteilt werden kann.

**5.** System nach Anspruch 4, dadurch gekennzeichnet, daß für alle Prozessoren ein gemeinsames eingespeichertes Programm vorgesehen ist, das einen bestimmten Videoeffekt definiert, der durch das Verarbeiten der ankommenden Signale erreicht werden soll.

**6.** System nach Anspruch 5, dadurch gekennzeichnet, daß der durch das Programm bestimmte Videoeffekt ein Effekt ist, der über eine Bildfläche hinweg erreicht werden soll, die eine Mehrzahl der rechteckigen Bildabschnitte aufweist, daß jeder der einem der rechteckigen Bildabschnitte entsprechenden diskreten Informationsabschnitte Koordinaten aufweist, welche die Relativlage dieses Abschnitts innerhalb der Fläche definieren, und daß die Anordnung zum Bereitstellen des zusammengesetzten Signals aus den resultierenden Informationsabschnitten Mittel zum Sortieren der resultierenden Abschnitte gemäß ihren entsprechenden Koordinaten aufweist.

**7.** System nach einem der Ansprüche 1 bis 6, dadurch gekennzeichnet, daß die Steueranordnung (13) zum Steuern der Datenübertragung zu jedem Prozessor (3) einen ersten Signalbus (12), der mit allen Prozessoren (3) parallel gekoppelt ist, und einen zweiten Signalbus (12) aufweist, der mit allen Prozessoren (3) in Serie gekoppelt ist, wobei die Anordnung so getroffen ist, daß jeder Prozessor (3) darauf programmiert ist, auf den ersten Signalbus (12) eine Anforderung zum Empfangen von zu verarbeitenden Daten zu geben; daß die Steueranordnung (13) so ausgelegt ist, daß sie als Antwort auf ein Anforderungssignal auf dem ersten Signalbus ein Antwortsignal zur Anzeige der Verfügbarkeit des oder eines Eingangspuffers für das Übermitteln von Daten auf den zweiten Signalbus gibt; und daß der erste Prozessor (3), der ein Anforderungssignal anlegt und der ein Antwortsignal empfängt, dafür ausgelegt ist, den Seriensignalweg für das Antwortsignal zu unterbrechen und einen an seinem Dateneingang angebotenen Datenabschnitt anzunehmen.

**8.** System nach einem der Ansprüche 1 bis 7, dadurch gekennzeichnet, daß die Steueranordnung (13) zum Steuern der Datenübertragung von jedem Prozessor (3) einen ersten Signalbus (12), der mit allen Prozessoren (3) parallel gekoppelt ist, und einen zweiten Signalbus (12) aufweist, der mit allen Prozessoren (3) in Serie gekoppelt ist, wobei die Anordnung so getroffen ist, daß jeder Prozessor (3) darauf programmiert ist, auf den ersten Signalbus (12) eine Anforderung zum Übermitteln von Daten zu geben; daß die Steueranordnung (13) so ausgelegt ist, daß sie als Antwort auf ein Anforderungssignal auf dem ersten Signalbus ein Antwortsignal zur Anzeige der Verfügbarkeit des oder eines Ausgangspuffers für das Empfangen von Daten auf den zweiten Signalbus gibt; und daß der erste Prozessor (3), der ein Anforderungssignal anlegt und der ein Antwortsignal empfängt, dafür ausgelegt ist, den Seriensignalweg für das Antwortsignal zu unterbrechen und einen Datenabschnitt an seinem Datenausgang bereitzustellen.

## Revendications

**1.** Système de traitement de données pour traiter des informations d'entrée reçues à partir d'une source (1) sous la forme d'un bloc d'informations comportant plusieurs sections discrètes, ledit système comportant une pluralité de processeurs (3), des moyens (2, 13) pour transférer le bloc d'informations vers les processeurs (3) de telle sorte que lesdites sections discrètes d'informations sont réparties entre des processeurs respectifs (3) et des moyens (5) destinés à recevoir des sections discrètes d'informations, après traitement, pour former un bloc composite d'informations traitées, caractérisé en ce que ladite source (1) comporte un tampon d'entrée, lesdits moyens (2, 13) pour répartir lesdites sections discrètes d'informations entre lesdits processeurs comportent un bus de données commun (2) agencé pour recevoir lesdites sections discrètes en série selon une relation minutée à partir dudit tampon d'entrée (1) et desdits moyens de commande d'entrée (13) pour sélectionner chaque processeur (3) destiné à recevoir ladite section discrète conformément à un état dans lequel celui-ci est prêt, lesdits moyens de réception (5) comportent un tampon de sortie et en ce que l'agencement est tel que chaque section discrète d'informations est mémorisée et traitée ensemble avec des informations indiquant sa position relative dans le bloc d'origine, de sorte qu'un bloc d'informations ayant un ordre correspondant peut être reformé à partir des informations traitées reçues par ledit tampon de sortie.

**2.** Système de traitement de données selon la revendication 1, caractérisé en ce qu'il comporte deux ou plus de deux tampons d'entrée (1), les tampons respectifs (1) étant associés de sorte que lesdits blocs et lesdites sections constitués de signaux différents dans les tampons différents puissent être corrélés les uns aux autres de sorte que des sections corrélées de signaux différents soient traitées par le même processeur (3).

**3.** Système de traitement de données selon la revendication 1 ou 2, destiné à être utilisé dans le traitement de signaux numériques de télévision, caractérisé en ce que les sources d'informations d'entrée comportent une image numérique de télévision ou des signaux d'image et/ou des signaux d'incrustation, et en ce que le bloc d'informations contenu dans chaque signal comporte une trame d'image individuelle d'un telle signal.

**4.** Système selon la revendication 3, caractérisé en ce que les sections discrètes de ladite trame d'image comportent des sections d'image individuelles, rectangulaires, dans lesquelles chaque trame d'image peut être divisée.

**5.** Système selon la revendication 4, caractérisé en ce que toute la pluralité de processeurs est munie d'un programme mémorisé commun définissant un effet vidéo particulier à obtenir par le traitement des signaux entrants.

**6.** Système selon la revendication 5, caractérisé en ce que l'effet vidéo selon ledit programme est un effet à atteindre sur une zone de ladite trame d'image comportant une pluralité desdites sections d'image rectangulaires, chacune desdites sections discrètes d'informations comportant une section d'image rectangulaire comporte des coordonnées définissant la position relative de ladite section dans ladite zone, et en ce que lesdits moyens pour fournir ledit signal composite à partir desdites sections résultantes d'informations comporte des moyens pour trier lesdites sections résultantes conformément à leurs coordonnées correspondantes.

**7.** Système selon l'une quelconque des revendications 1 à 6, caractérisé en ce que lesdits moyens de commande (13) comportent, pour commander le transfert de données vers chaque processeur (3), un premier bus de signaux (12) relié en parallèle à tous les processeurs (3), et un second bus de signaux (12) relié en série à tous les processeurs (3), l'agencement étant tel que chaque processeur (3) est programmé pour appliquer audit premier bus de signaux (12) une requête pour recevoir des données à traiter ; en ce qu'en réponse à un signal de requête situé sur ledit premier bus de signaux, les moyens de commande (13) sont agencés pour fournir sur ledit second bus de signaux un signal de réponse indiquant la disponibilité du tampon ou d'un tampon d'entrée pour transmettre des données ; et en ce que le premier processeur (3) qui applique un signal de requête et qui reçoit un signal de réponse est agencé pour interrompre le trajet de signaux en série du signal de réponse et accepter une section de données présentée au niveau de son entrée de données.

**8.** Système selon l'une quelconque des revendications 1 à 7, caractérisé en ce que lesdits moyens de commande (13) comportent, pour commander le transfert des données à partir de chaque processeur (3), un premier bus de signaux (12) relié en parallèle à tous les processeurs (3), et un second bus de signaux (12) relié en série à tous les processeurs (3), l'agencement étant tel que chaque processeur (3) est programmé pour appliquer audit premier bus de signaux (12) une requête pour transmettre des données ; en ce qu'en réponse à un signal de requête situé sur ledit premier bus de signaux, les moyens de commande (13) sont agencés pour fournir sur ledit second bus de signaux un signal de réponse indiquant la disponibilité du tampon ou d'un tampon de sortie pour recevoir des données ; et en ce que le premier processeur (3) qui applique un signal de demande et qui reçoit un signal de réponse est agencé pour interrompre le trajet de signaux en série du signal de réponse et fournir une section de données au niveau de sa sortie de données.

OUTPUT BUFFER
5
OUTPUT BUS
4
13
INPUT CONTROL
CONTROL SIGNALS 12
3
PROCESSOR
PROCESSOR
3
INPUT BUS 2
6
BUFFER STORE
BUFFER STORE
CONTROL COMPUTER.
GENERAL ARRGT.
INPUT VIDEO
1
INPUT VIDEO
1

Fig.1.

Fig.2. DETAIL OF PROCESSOR -3.

Single lines represent flow of data under program control, double lines flow of data under control of video timing signals.

INPUT STORE
7
INPUT STORE
7
INPUT STORE
7
11
CENTRAL PROCESSING UNIT
OUTPUT STORE
8
READ ONLY STORE
10
WRITEABLE STORE
9
FROM CONTROL COMPUTER